Europäisches Patentamt

European Patent Office

Office européen des brevets

(19)

(11) Publication number: **0 220 268 B1**

(12) # EUROPEAN PATENT SPECIFICATION

(45) Date of publication of patent specification: **28.10.92**  (51) Int. Cl.5: **F24D 19/10**, F28F 27/00

(21) Application number: **86902928.0**

(22) Date of filing: **18.04.86**

(86) International application number:
**PCT/SE86/00177**

(87) International publication number:
**WO 86/06459 (06.11.86 86/24)**

(54) **AN ARRANGEMENT FOR CONTROLLING AND REGULATING THE SUPPLY OF ENERGY TO A HEAT EXCHANGER.**

(30) Priority: **23.04.85 SE 8501972**

(43) Date of publication of application:
**06.05.87 Bulletin 87/19**

(45) Publication of the grant of the patent:
**28.10.92 Bulletin 92/44**

(84) Designated Contracting States:
**BE CH DE FR GB LI NL**

(56) References cited:
**GB-A- 1 149 806**
**SE-B- 403 827**
**SE-C- 367 053**
**US-A- 3 670 807**

(73) Proprietor: **CAIRENIUS, Per**
**Braxstigen 7**
**S-135 42 Tyresö(SE)**

(72) Inventor: **CAIRENIUS, Per**
**Braxstigen 7**
**S-135 42 Tyresö(SE)**

(74) Representative: **Lindblom, Erik J.**
**Flotthamn**
**S-150 23 Enhörna(SE)**

EP 0 220 268 B1

## Description

### TECHNICAL FIELD

The present invention relates to an arrangement for controlling and regulating the supply of energy to a heat exchanger, as stated in the preamble of claim 1.

### BACKGROUND PRIOR ART

Various kinds of arrangments are known to the art in which the supply of energy to a heat exchanger having associated therewith a primary circuit, connected to a municipal or district central heating network, and a secondary circuit connected to a network for consumer hot-water or hot tap-water is effected by regulating the setting of a valve means incorporated in the primary circuit in response to prevailing energy requirments created by drawing hot water from the secondary circuit, and in which there is incorporated in the secondary circuit a thermostat valve effective to mix together two media, for example water, of mutually different temperatures, in a manner to maintain constantly a desired temperature in that part of the secondary circuit containing the hot consumer water or hot tap-water.

One such known arrangement of this kind utilizes a temperature responsive element which is connected to the secondary circuit associated with the heat exchanger at a location immediately adjacent thereto (where the secondary circuit departs from the heat exchanger), this temperature responsive element being arranged to controllably activate a valve means embodied in the aforesaid primary circuit.

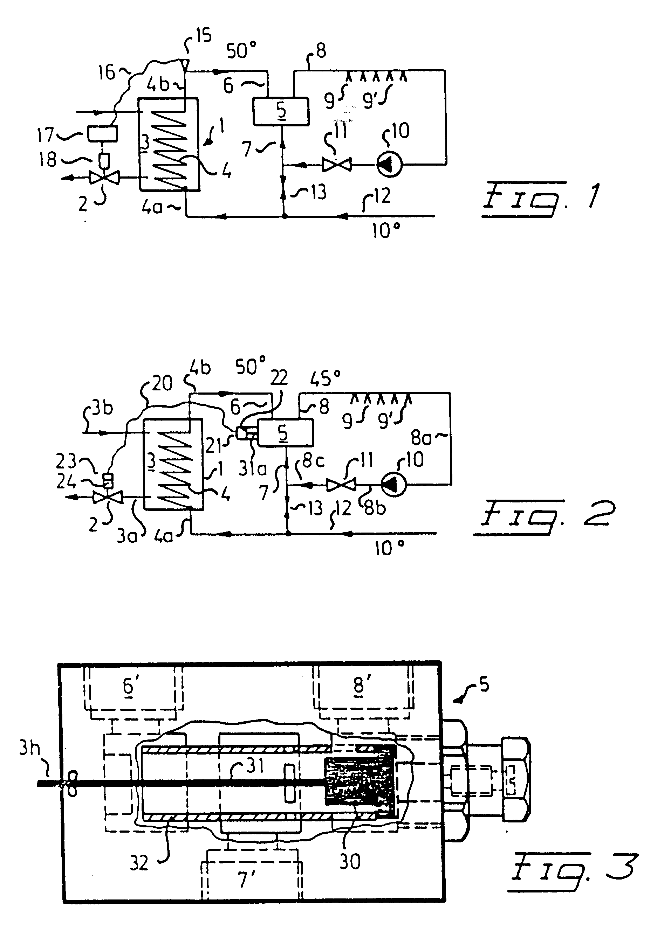

An arrangement of this kind, forming part of the prior art, will be described in more detail hereinafter with reference to Figure 1 of the accompanying drawing.

The Swedish Lay-Out Print No. 328 388 describes and illustrates an arrangement for heating flowing consumer water with the aid of hot water taken from a municipal or district hot-water network, in which the consumer water is heated in a heat exchanger through the exchange of heat with hot water taken from municipal hot-water flowing simultaneously through said heat exchanger, this arrangement also incorporating automatic control valve means effective to vary the flow of the water from the municipal hot-water network in a manner such as to maintain the temperature of the consumer water substantially constant, irrespective of momentary fluctuations in the quantities of water drawn from the flow of consumer water.

In this prior art arrangement, the control means incorporates a flow sensor or pressure sensor incorporated in the consumer-water line and adapted to adjust the setting of a control valve incorporated in the municipal hot-water line so as to regulate the flow of water through said line, this adjustment being effective to increase the flow of water in said line when the flow of consumer water increases, and vice versa.

According to one preferred embodiment of this known arrangement, the flow sensor includes a movable element which is acted upon by the flow of water in the consumer water line and caused to take one of a series of mutually different positions in dependence on the momentary magnitude of thewater flow, and the arrangement includes a regulating valve having a valve body which is so connected to the movable element of the flow sensor as to regulate the flow of water from the municipal hot-water network in response to movement of the movable element.

This invention is based upon the device shown in US-A-3670807.

### SUMMARY OF THE PRESENT INVENTION

### TECHNICAL PROBLEMS

It will be seen from the present state of the art aforedescribed that one technical problem resides in creating, with the aid of simple means, conditions which enable the consumer hot-water, or hot tap-water, to be kept at a uniform and constant temperature substantially independently of the prevailing temperature of the hot water in the municipal hot-water network.

Another technical problem is one of creating conditions which enable the consumer water to be kept at a constant temperature even when the consumption of consumer hot-water drastically increases or decreases temporarily.

A further technical problem in this regard is one of providing simple means which will ensure that high-temperature medium present in the heat exchanger will not have a deleterious affect on the desired constant temperature-level of the consumer water, irrespective of whether large or small amounts of consumer water are drawn-off over abrupt periods.

Another qualified technical problem will be seen to reside in creating, with the aid of simple means, conditions which enable movement of a thermostat valve incorporated in the secondary circuit of the heat exchanger to be transmitted to and to act immediately upon a valve means incorporated in the primary circuit of the heat exchanger.

A further qualified technical problem in arrangements for controlling and regulating energy supply of this kind is one of perceiving that adjustment of the valve means incorporated in the primary circuit of the heat exchanger shall not be effected primarily in response to the temperature prevailing in the secondary circuit at a location adjacent the heat exchanger, but that the valve means shall, instead, be regulated with the aid of valve movements occurring in the thermostat valve, on the basis of this perception, so that conditions can be created which will enable temperature to be regulated substantially independently of temperature deviations occurring between the secondary and primary circuits, and substantially independently of temperature changes within one and the same circuit.

It will also be seen that a further technical problem is one of providing conditions which will enable the temperature responsive element utilized in the known arrangements for regulating the valve means in the primary circuit to be omitted, and to provide simple means which are effective to maintain the consumer water at a given constant temperature, despite the creation of the aforesaid conditions.

Still another qualified technical problem is one of creating conditions such that when large quantities of consumer water are tapped-off, or when the temperature of the medium in the primary circuit is low, the temperature of the consumer hot-water will nevertheless be maintained at the desired constant temperature, by regulating the valve means in the primary circuit in direct response to the energy requirement.

## SOLUTION

The present invention relates to an arrangement for controlling and regulating the supply of energy to a heat exchanger as stated in the preamble of claim 1.

The significant features related to the present invention are stated in the characterizing part of claim 1 Embodiments falling within the scope of the invention are stated in the subclaims.

## ADVANTAGES

Those advantages which can be said to be primarily characteristic of an arrangement according to the invention reside in the creation of conditions which enable the setting of the valve means incorporated in the primary circuit associated with the heat exchanger to be regulated or adjusted in a much more ready fashion than was previously the case, so that the supply of energy from the primary circuit to the heat exchanger will be brought, without appreciable delay, into relationship with the prevailing energy requirement of the secondary circuit, and especially with the energy input required to maintain the hot consumer-water or hot tap-water at a constant temperature, irrespective of the amount of hot-water consumed and substantially irrespective of the prevailing temperature of the water in the municipal or district hot-water network.

## BRIEF DESCRIPTION OF THE DRAWINGS

An exemplifying embodiment at present preferred and exhibiting features significant of the present invention will now be described with reference to the accompanying drawing, in which

Figure 1 is a circuit diagram illustrating a circuit for controlling the supply of hot tap-water in accordance with a known method forming part of the prior art;

Figure 2 illustrates diagrammatically a corresponding control circuit constructed in accordance with the present invention;

Figure 3 is a side view, shown partly in section, of a thermostat valve constructed in accordance with the invention and intended for controlling the supply of energy to a heat exchanger in accordance with the present invention.

## DESCRIPTION OF A PREFERRED EMBODIMENT

Figure 1 illustrates a prior art arrangment for controlling and regulating the supply of energy to a heat exchanger 1, through the adjustment of a valve means 2 connected to a primary circuit 3 associated with the heat exchanger 1, this adjustment of the valve means being made in response to the prevailing energy requirement of a secondary circuit 4 associated with the heat exchanger 1.

The secondary circuit 4 incorporates connecting lines or pipes 4a and 4b, and also a thermostat valve 5 which is effective to mix together two media, such as water, of mutually different temperatures, namely a first high-temperature medium in a line 6 and a low-temperature medium in a line 7, in a manner such as to maintain a medium flowing through a line 8 at a constant mean temperature, the line 8 having connected thereto a plurality of tap locations 9, 9' from which consumer hot-water, or hot tap-water, can be taken, the temperature of said water being held at a constant level to the greatest possible extent.

The reference 10 identifies a pump, while the reference 11 identifies a non-return valve. Cold water is supplied through a pipe 12 to the secondary circuit 4 of the heat exchanger and to the thermostat valve 5, through a pipe 13 and a pipe 7.

The known arrangement includes a temperature-responsive element or thermal transducer 15 which is connected, via a line 16, to a control centre 17, which in turn influences control means 18 for controlling the valve means 2.

Practical experience has shown that when using the arrangement illustrated in Figure 1 it is not possible to maintain the hot consumer-water in the line 8 at a constant desired temperature, e.g. 50°C, irrespective of whether the control centre 17 and the temperature-responsive device 15 are electronic or automotive, i.e. self-acting. This is most likely due to the fact that the temperature-responsive element 15 detects solely the previaling temperature and not the prevailing requirement. A further reason is possibly because the temperature is detected actually at a location immediately adjacent the secondary circuit 4 associated with the heat exchanger. Each fluctuation in temperature will result immediately, via the element 15, in excessive opening or closing movement of the valve means 2 incorporated in the primary circuit, these valve movements being too excessive to enable satisfactory regulation of the sensed temperature differences. This circuit can be said to operate with a phase-displacement.

The inclusion of a thermostat valve 5 in the circuit has not satisfactorily resolved the aforesaid problems, of which one is the wide difference in temperature, say 30-90°C, of the water flowing through the line 6 in practice.

In Figure 2 there is illustrated diagrammatically a circuit constructed in accordance with the invention, the same references as those used in Figure 1 being used to identify elements similar to those of the Figure 1 embodiment.

The circuit arrangement of Figure 2 differs from that illustrated in Figure 1, insomuch as the temperature-responsive element 15, or thermal transducer, the line 16, the control centre 17, and the control means 18 have been omitted and replaced with an inter-connecting line 20 extending directly between the thermostat valve 5 and the valve means 2.

According to the invention, the setting of the thermostat valve constitutes a control magnitude for regulating the setting of the valve means 2, so as to achieve thereby a controlled supply of energy to the heat exchanger 12 in response to the prevailing energy requirement of the secondary unit, and then in particular the energy requirement of the temperature-regulated hot consumer-water or hot tap-water passing through the line 8 and out through the tap locations 9, 9'.

It is also proposed that the medium passing through the primary circuit and through the connecting lines or pipes 3a and 3b is hot-water taken from a municipal or district heating system, whereas the medium passing through the secondary circuit 4 is hot tap-water or hot consumer-water, the temperature of which is controlled by a thermostat valve 5.

In accordance with the invention, the thermostat valve 5 is connected directly to the hot-water produced in the secondary circuit 4 of the heat exchanger 1 and conducted through the line 6, the mixed water being conducted from the thermostat valve 5 through the line 8 to the aforesaid tap locations 9, 9'. These tap locations are distributed around a loop comprising the line 8, a line 8a, a line 8b, and a line 8c, this latter line, or pipe 8c being connected to the water supply line 12, via a line 13. The line 8c is also connected to the thermostat valve 5 via the line 7.

In Figure 3 there is shown, partly in section, a thermostat valve constructed in accordance with the invention. The valve has a connector 6' for connecting the valve to the line or pipe 6, a connector 7' for connection to the line or pipe 7, and a connector 8' for connection to the line or pipe 8, said lines or pipes forming part of the hot-water circuit illustrated in Figure 2.

The illustrated thermostat valve 5 includes a sensitive or responsive element 30 which is connected to a regulating cylinder or valve body 32. The responsive element has connected thereto a spindle which presses against the valve wall and displaces the cylinder 32 to a corresponding water-mixing position. The responsive element 30 or the cylinder 32 is provided with means effective to allow the setting of the thermostat valve 5 to be precisely determined from outside the valve. In the illustrated embodiment of the thermostat valve, this indicating means has the form of a rod 31 which is stationary in relation to the cylinder 32 and the free end 31a of which extends beyond the housing of the thermostat valve.

As illustrated in Figure 2, the thermostat valve has fitted thereto a pressure cell 21 which incorporates a plunger 22. This plunger is arranged to co-act with the free-end 31a of the rod in a manner to move in correspondence with movement of the rod. The pressure cell 21 is connected hydraulically, by means of a pipe or hose 20, to a further, corresponding pressure cell 23 incorporating a plunger 24, the arrangement being such that a corresponding movement of the plunger 22 in the pressure cell 21 is transmitted to the plunger 24 of the further pressure cell 23, which in turn is able to control directly the setting of the cylinder 32 of the valve means 2.

The pressure cells 21 and 23, the pipe or hose 20, and the setting of the rod 31 are arranged so that when the thermostat valve 5 is closed with respect to the passage of hot-water through the line 6, the valve means 2 is also closed, or nearly closed.

It will be understood that the construction of the valve means 2 illustrated in Figure 3 enables the setting of the valve means to be adjusted in response to the prevailing energy requirement of the secondary circuit, and in particular to the energy requirement corresponding to the extent to which consumer-water is drawn off.

It will also be understood that when using an arrangement according to the invention as illustrated in Figures 2 and 3, the setting to which the thermostat valve 5 is adjusted will correspond to and be contingent upon the energy requirement at that particular moment in time, i.e. the prevailing requirement, in dependence on the amount of hot-water drawn from the tap locations 9, 9', and the temperature of said water.

Thus, when large quantities of water are drawn from the tap locations 9, 9', and the temperature of the water in the secondary circuit 4 falls correspondingly, or when the municipal or district hot-water in the primary circuit 3 is heated to a lower temperature in the summer months, the valve means 2 will open commensurately, to allow more hot-water to pass through the primary circuit 3 of the heat exchanger and permit more hot-water in the line 6 to pass through the thermostat valve 5, and reduce the amount of cold water entering through the line 7 at the same time.

It will readily be seen that the valve means 2 is controlled directly by the requirement indicated through the setting of the thermostat valve 5.

## Claims

1. An arrangement for controlling and regulating the supply of energy to a heat exchanger (1), by regulating a first valve means (2) incorporated in a primary circuit (3) associated with the heat exchanger (1) in response to the prevailing energy requirement of a secondary circuit (4) associated with said heat exchanger (1), this secondary circuit (4) incorporating a second valve (5) which is effective to mix together two media, for example water, of mutually different temperatures, in a manner to maintain medium in a part (8) of the secondary circuit at a constant temperature, whereby the setting of the second valve (5) constitutes a control magnitude for regulating the setting of the first valve means (2), such as to create a controlled supply of energy to the heat exchanger (1) in response to, or substantially in response to, the prevailing energy requirement of the secondary circuit. (8) whereby said second valve (5) is connected directly to hot-water (4b) produced in the heat exchanger (1); and connected (7) directly to cold water; characterized in that said second valve is a thermostat valve, that the setting of said thermostat valve is directly actuating and regulating said first valve means (2) and that said part (8) of the secondary circuit, whereto the resultant hot water-mixture is connected, forms a loop, which is connected to the cold water (7), said loop incorporating a plurality of tap locations."

2. An arrangement according to Claim 1, **characterized** in that the arrangement further includes a pressure cell (21) which incorporates a plunger (22) intended for co-action with the free end (31a) of a rod, such as to transmit correspondingly movement of the rod to the plunger (24) of a further, similar pressure cell (23), which activates the valve means. (2)

3. An arrangement according to Claim 1 or 2 **characterized** in that the arrangement is such that a closed thermostat valve (5) with regard to the passage (4b) of hot-water to the secondary circuit (4) results in a closed, or nearly closed, valve means (2) in the primary circuit. (3)

4. An arrangement according to Claim 1, **characterized** in that the setting of the second valve means (5) is adjusted in dependence upon the prevailing energy requirement of the secondary circuit. (4)

5. An arrangement according to Claim 2, **characterized** in that said movement transmission is effected hydraulically.

## Patentansprüche

1. Einrichtung zum Steuern und Regulieren der Zufuhr von Energie zu einem Wärmetauscher (1) durch Regulieren eines ersten Ventils (2), das sich in einem mit dem Wärmetauscher (1) verbundenen Primärkreislauf (3) befindet, in Reaktion auf den vorherrschenden Energiebedarf eines Sekundärkreislaufs (4) in Verbindung mit dem genannten Wärmetauscher (1), wobei dieser Sekundärkreislauf (4) ein zweites Ventil (5) aufweist, das zum Vermischen von zwei Medien mit voneinander unterschiedlichen Temperaturen, zum Beispiel Wasser, auf eine solche Weise dient, daß das Medium in einem Teil (8) des Sekundärkreislaufs auf einer konstanten Temperatur gehalten wird, wodurch die Einstellung des zweiten Ventils (5) eine Steuergröße zum Regulieren der Einstellung des ersten Ventils (2) darstellt, um eine gesteuerte Zufuhr von Energie zu dem Wärmetauscher (1) in Reaktion auf, oder im wesentlichen in Reaktion auf, den vorherrschenden Energiebedarf des Sekundärkreislaufs (8) zu erzeugen, wodurch das genannte zweite Ventil (5) unmittelbar mit dem in dem Wärmetauscher (1) erzeugten Heißwasser (4b) und unmittelbar mit Kaltwasser in Verbindung (7) steht, dadurch gekennzeichnet, daß das genannte zweite Ventil ein Thermostatventil ist, daß die Einstellung des genannten Thermostatventils unmittelbar betätigend und regulierend auf das genannte erste Ventil (2) wirkt und daß der genannte Teil (8) des Sekundärkreislaufs, mit dem das resultierende Heißwassergemisch in Verbindung steht, einen Kreis bildet, der mit dem kalten Wasser (7) in Verbindung steht, wobei der genannte Kreis eine Mehrzahl von Abzapfstellen aufweist.

2. Einrichtung nach Anspruch 1, dadurch gekennzeichnet, daß die Einrichtung weiterhin eine Druckzelle (21) mit einem Kolben (22) darin aufweist, der mit dem freien Ende (31a) einer Kolbenstange zusammenwirken soll, um so eine Bewegung der Kolbenstange auf den Kolben (24) einer weiteren, ähnlichen Druckzelle (23) entsprechend zu übertragen, die das Ventil (2) aktiviert.

3. Einrichtung nach Anspruch 1 oder 2, dadurch gekennzeichnet, daß die Einrichtung bei einem geschlossenen Thermostatventil (5) in bezug auf den Durchfluß (46) von Heißwasser zum Sekundärkreislauf (4) ein geschlossenes bzw. nahezu geschlossenes Ventil (2) im Primärkreislauf (3) zur Folge hat.

4. Einrichtung nach Anspruch 1, dadurch gekennzeichnet, daß sich die Einstellung des zweiten Ventils (5) je nach dem vorherrschenden Energiebedarf des Sekundärkreislaufs (4) ändert.

5. Einrichtung nach Anspruch 2, dadurch gekennzeichnet, daß die genannte Bewegungsübertragung hydraulisch erfolgt.

**Revendications**

1. Arrangement pour commander et réguler la fourniture d'énergie à un échangeur de chaleur (1), en régulant des premiers moyens formant vanne (2) incorporés dans un circuit primaire (3) associé à l'échangeur de chaleur (1) en réponse à la demande d'énergie régnant dans un circuit secondaire (4) associé audit échangeur de chaleur (1), ce circuit secondaire (4) comportant une deuxième vanne (5) qui sert à mélanger ensemble deux milieux, par exemple de l'eau à des températures mutuellement différentes, de manière à maintenir un milieu à une température constante dans une partie (8) du circuit secondaire, le réglage de la deuxième vanne (5) constituant ainsi une grandeur de commande pour réguler le réglage des premiers moyens formant vanne (2), de façon à créer une fourniture commandée d'énergie à l'échangeur de chaleur (1) en réponse à, ou substantiellement en réponse à la demande d'énergie régnant dans le circuit secondaire (8), ladite deuxième vanne (5) étant ainsi raccordée directement à l'eau chaude (4b) produite dans l'échangeur de chaleur (1) et raccordée (7) directement à l'eau froide, caractérisé en ce que ladite deuxième vanne est une vanne thermostatique, en ce que le réglage de ladite vanne thermostatique actionne et régule directement lesdits premiers moyens formant vanne (2) et en ce que ladite partie (8) du circuit secondaire, à laquelle le mélange d'eau chaude résultant est raccordé, forme une boucle qui est raccordée à l'eau froide (7), ladite boucle comportant une pluralité d'endroits de prélèvement.

2. Arrangement suivant la revendication 1, caractérisé en ce que l'arrangement comprend en outre une cellule de pression (21) comportant un plongeur (22) destiné à coopérer avec l'extrémité libre (31a) d'une tige, de façon à transmettre de manière correspondante un mouvement de la tige au plongeur (24) d'une autre cellule de pression (23) similaire, qui actionne les moyens formant vanne (2).

3. Arrangement suivant la revendication 1 ou 2, caractérisé en ce que l'arrangement est tel qu'une vanne thermostatique (5) fermée par rapport au passage (4b) d'eau chaude vers le circuit secondaire (4) se traduit par des moyens formant vanne (2) fermés, ou presque fermés, dans le circuit primaire (3).

4. Arrangement suivant la revendication 1, caractérisé en ce que le réglage des seconds moyens formant vanne (5) est ajusté en fonction de la demande d'énergie régnant dans le circuit secondaire (4).

5. Arrangement suivant la revendication 2, caractérisé en ce que ladite transmission de mouvement est effectuée par des moyens hydrauliques.

*Fig. 1*

*Fig. 2*

*Fig. 3*